(19) **Europäisches Patentamt**

**European Patent Office**

**Office européen des brevets**

(11) **EP 1 333 192 B1**

(12) **EUROPEAN PATENT SPECIFICATION**

(45) Date of publication and mention
of the grant of the patent:
**25.10.2006 Bulletin 2006/43**

(51) Int Cl.:
***F16F 15/24*** *(2006.01)*

(21) Application number: **03001386.6**

(22) Date of filing: **27.01.2003**

(54) **Method for determining an angle of crank arrangement in a multi-cylinder internal combustion engine and a multi-cylinder internal combustion engine using this method**

Verfahren zur Bestimmung eines Winkels der Kurbelanordnung eines Multizylinderverbrennungsmotor und zugehöriger Multizylinderverbrennungsmotor

Procédé de détermination d'un angle du mécanisme de manivelle pour moteur à combustion interne multicylindre et moteur à combustion interne multicylindre correspondant

(84) Designated Contracting States:
**AT BE BG CH CY CZ DE DK EE ES FI FR GB GR HU IE IT LI LU MC NL PT SE SI SK TR**

(30) Priority: **30.01.2002 JP 2002020985**

(43) Date of publication of application:
**06.08.2003 Bulletin 2003/32**

(73) Proprietor: **MITSUBISHI HEAVY INDUSTRIES, LTD.**
**Tokyo (JP)**

(72) Inventors:
 • **Ito, Kuninori,**
 **Yokohama R&D Center**
 **Kanazawa-ku,**
 **Yokohama-shi,**
 **Kanagawa-ken (JP)**

 • **Sato, Nobuaki,**
 **Yokohama R&D Center**
 **Kanazawa-ku,**
 **Yokohama-shi,**
 **Kanagawa-ken (JP)**

(74) Representative: **HOFFMANN EITLE**
 **Patent- und Rechtsanwälte**
 **Arabellastrasse 4**
 **81925 München (DE)**

(56) References cited:
 **FR-A- 826 173**

 • **PATENT ABSTRACTS OF JAPAN vol. 2000, no. 20, 10 July 2001 (2001-07-10) & JP 2001 065443 A (MITSUBISHI HEAVY IND LTD), 16 March 2001 (2001-03-16)**
 • **PATENT ABSTRACTS OF JAPAN vol. 0071, no. 20 (M-217), 25 May 1983 (1983-05-25) & JP 58 037342 A (ISHIKAWAJIMA HARIMA JUKOGYO KK), 4 March 1983 (1983-03-04)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

The present invention generally relates to a method of providing a crank throw arrangement in a multi-cylinder internal combustion engine, which method comprises a method of determining an angle of the crank throw arrangement and to a multi-cylinder internal combustion engine having an angle of a crank throw arrangement which is determined using this method. More particularly, the determination method is for determining the angle of the crank throw arrangement (ignition interval) of each cylinder in a multi-cylinder reciprocating internal combustion engine, that is most influential on the engine vibration, so that unbalanced couple acting as vibrating force becomes minimum. Also, the invention relates to engines provided by this method i.e. to 9 embodiments of multi-cylinder reciprocating internal combustion engines that have the angle of the crank throw arrangement determined so that the unbalanced couple becomes minimum. These engines include a 4-stroke cycle in-line type 7 cylinder or V-type 14 cylinder internal combustion engine, a 4-stroke cycle in-line type 9 cylinder or V-type 18 cylinder internal combustion engine and a 2-stroke cycle in-line type 8 cylinder internal combustion engine.

Description of the Prior Art

The vibrating force that generates vibration in the reciprocating internal combustion engine includes unbalanced force, external couple, internal couple, torque variation, etc. and the vibration includes many kinds of vibration, such as vibration of the engine main body, torsional vibration of the crankshaft, etc.

In the multi-cylinder reciprocating internal combustion engine, the vibrating force is caused mainly by inertia force of moving portions in the internal combustion engine and explosion force in the cylinder. But, as the angle of the crank throw arrangement of each cylinder is changed, the direction of vibrating force changes in each of the cylinders. Hence, the vibrating force as a whole in the internal combustion engine is largely influenced by the angle of the crank throw arrangement.

The inventors here have heretofore studied to suppress within an allowable range the unbalanced force caused in the multi-cylinder reciprocating internal combustion engine that has the angle of the crank throw arrangement unequally spaced, and disclosed a method for determining the angle of the crank throw arrangement so as to obtain the optimal angle of the crank throw arrangement by which the vibrating force in question can be reduced to a necessary level regardless of the number of cylinders (the Japanese laid-open patent application No. 2001-65443).

That is, according to the abovementioned method, the angle of the crank throw arrangement in a multi-cylinder reciprocating internal combustion engine is determined as follows:

Where n is the number of cylinders, that is, the number of crank throws, the unbalanced force $F_j$ of order k of each cylinder is represented by:

$$F_j = F_k \cdot \exp(i_k \alpha_j)$$

(Here, $F_k$ is a size of the unbalanced force of order k, $i=(-1)^{1/2}$ and $\alpha_j$ is an angle of the crank throw arrangement of number j, j being 1, 2, ···, n.)

The unbalanced force $F_j$ is weighted by distance L between each cylinder and added together, so that the unbalanced couple of order k, $M_{(k)}$, that acts as the vibrating force, is represented by:

$$M_{(k)} = F_k L [s_1 \quad s_2 \quad \cdots \quad s_n][\exp(ik \cdot \alpha_1) \exp(ik \cdot \alpha_2) \quad \cdots \quad \exp(ik \cdot \alpha_n)]^t = F_k L \cdot f_k$$

wherein the unbalanced force of order m, $F_{(m)}$, is represented by:

$$F_{(m)} = F_m [1 \quad 1 \quad \cdots \quad 1][\exp(im \cdot \alpha_1) \exp(im \cdot \alpha_2) \quad \cdots \quad \exp(im \cdot \alpha_n)]^t = F_m \cdot g_m$$

(Here, m is the number or numbers of order or orders of the unbalanced force that is wanted to fall within an allowable range, that is, 1 and 2 for example. $s_j$ means a non-dimensional coordinate in the crank axial direction of the crank throw of number j, represented by a plus or minus value from a reference crank throw, that is, $s_j$ may be smaller than 0 ($s_j<0$). When the crank throw of number j is the reference crank throw, $s_j$ equals 0 ($s_j=0$). t is a designation of a turned matrix.)

In the above equation, $g_m$ is a non-dimensional coefficient, that is represented by:

$$g_m = \{ [1\ 1\cdots\ 1]\ [\exp(im\cdot\alpha_1)\ \exp(im\cdot\alpha_2)\ \cdots\ \exp(im\cdot\alpha_n)]^t \}$$

Under such a restrictive condition that the value of gm is to fall within the allowable value, a non-dimensional coefficient $f_k$ of the abovementioned unbalanced couple $M_{(m)}$, that is represented by;

$$f_k = \{ [s_1\ s_2\ \cdots\ s_n][\exp(ik\cdot\alpha_1)\ \exp(ik\cdot\alpha_2)\ \cdots\ \exp(ik\cdot\alpha_n)]^t \}$$

is minimized and thereby the angle of the crank arrangement $\alpha_j$ can be obtained. (As $\alpha_j$ is an angle of the relative arrangement between each cylinder, one thereof is fixed.)

On the other hand, not much attention has so far been paid to employing an internal combustion engine of 7 cylinders or 9 cylinders because of worries of occurrence of vibration due to the unbalanced force. Hence, such an uneconomical use of cylinders as 8 cylinders instead of 7 cylinders or 10 cylinders instead of 9 cylinders has been carried out.

Also, even in the engine of 8 cylinders, 10 cylinders or the like in which the vibration is relatively low, if a further lower vibration is required, it is needed to reduce the vibration by an additional device, such as a balancer.

Moreover, in a passenger ship or the like, if the internal combustion engine is elastically supported relative to the hull for vibration isolation, influence of the couple caused by the unbalanced force largely acts so that large vibration of the internal combustion engine appears, and pipings, etc, connected to the internal combustion engine are liable to be damaged. Hence, realization of such an internal combustion engine as has less vibration by the angle of the crank throw arrangement that satisfies the mentioned non-linear optimization condition has been long desired.

However, it is not always easy to provide an internal combustion engine having such an unequally spaced crank arrangement as meets the non-linear optimization condition.

## SUMMARY OF THE INVENTION

It is an object of the present invention to provide a practical method of providing a crank throw arrangement in a multi-cylinder reciprocating internal combustion engines, which method comprises a method of determining an angle of the crank throw arrangement. This object is solved by the features of independent claim 1 or 2. The claimed method comprises minimizing the unbalanced couple acting as vibrating force as follows:
Where;
$M_{(k)}$ is an unbalanced couple of order k that is expressed in the form that an unbalanced force of each cylinder in the engine is weighted by distance between each cylinder and added together and is represented by;

$$M_{(k)} = F_k L[s_1\ s_2\ \cdots\ s_n][\exp(ik\cdot\alpha_1)\ \exp(ik\cdot\alpha_2)\ \cdots\ \exp(ik\cdot\alpha_n)]^t = F_k L \cdot f_k$$

and
$f_k$ is a non-dimensional coefficient in the above $M_{(k)}$ and is represented by;

$$f_k = \{ [s_1\ s_2\ \cdots\ s_n][\exp(ik\cdot\alpha_1)\ \exp(ik\cdot\alpha_2)\ \cdots\ \exp(ik\cdot\alpha_n)]^t \} ;$$

an angle of the crank throw arrangement $\alpha_j$ (ignition interval) that can minimize the non-dimensional coefficient $f_k$ is found and thereby the angle of the crank throw arrangement that can minimize the unbalanced couple acting as vibrating force is minimized.

It is also an object of the present invention to provide such an internal combustion engine as employs the angle of the crank throw arrangement determined as mentioned above. This object is solved by the features of claims 3 to 11. Preferred embodiments are subject of dependent claims 12 to 14. These engines include a 4-stroke cycle in-line type 7 cylinder or V-type 14 cylinder engine, a 4-stroke cycle in-line type 9 cylinder or V-type 18 cylinder engine and a 2-stroke cycle in-line type 8 cylinder engine. These engines of the V-type arse such ones as have a structure in which a piston/connecting rod arrangement in one crank throw and the same vibrating force description can be made as in the in-line type 7 or 9 cylinder internal combustion engines.

In order to achieve the abovementioned object, the present invention provides a method of providing a crank throw arrangement, which method comprises a method for determining at least one of the angles of the relative arrangement between each cylinder, i.e. at least one of the angles of a crank throw arrangement in a multi-cylinder reciprocating internal combustion engine, comprising the steps of:

where;

$F_{(m)}$ is the sum of the unbalanced force of order m that acts as vibrating force in the multi-cylinder reciprocating internal combustion engine (having the number of crank throws of n) and is represented by;

$$F_{(m)}=F_m[1 \; 1 \; \cdots \; 1][\exp(im \cdot \alpha_1) \; \exp(im \cdot \alpha_2) \; \cdots \; \exp(im \cdot \alpha_n)]^t = F_m \cdot g_m$$

in being the number or numbers of order or orders of the unbalanced force that is wanted to fall within an allowable range, for example 1 and 2, $i=(-1)^{1/2}$ and $\alpha_j$ being an angle of the crank throw arrangement of number j, j being 1, 2, $\cdots$, n, and $|g_m|$ is an absolute value of a non-dimensional coefficient of the unbalanced force, that is obtained by $F_{(m)}$ being divided by $F_m$, and is represented by;

$$|g_m|=abs\{[1 \; 1 \cdots \; 1] \; [\exp(im \cdot \alpha_1) \; \exp(im \cdot \alpha_2) \; \cdots \; \exp(im \cdot \alpha_n)]^t\} \; ;$$

setting a restrictive condition in which both of m=1 and m=2 of $|g_m|$ are made zero or are endlessly approached to zero or are set to or within a finite value that is allowed by the surrounding environment where the engine is installed, and

where;

$M_{(k)}$ is an unbalanced couple that is expressed by the unbalanced force of order k of each crank throw, weighted by distance L between each cylinder, and is represented by;

$$M_{(k)}=F_k L[s_1 \; s_2 \; \cdots \; s_n][\exp(ik \cdot \alpha_1) \; \exp(ik \cdot \alpha_2) \; \cdots \; \exp(ik \cdot \alpha_n)]^t = F_k L \cdot f_k$$

(Here, $s_j$ is a non-dimensional coordinate in the crank shaft direction of the crank throw of number j.) and $|f_k|$ is an absolute value of a non-dimensional coefficient of the unbalanced couple, that is obtained by $M_{(k)}$ being divided by $F_k L$, and is represented by;

$$|f_k|=abs \{ [s_1 \; s_2 \; \cdots \; s_n][\exp(ik \cdot \alpha_1) \; \exp(ik \cdot \alpha_2) \; \cdots \; \exp(ik \cdot \alpha_n)]^t \} \; ;$$

obtaining an angle of the crank throw arrangement $\alpha_j$ by an expression on an orthogonal coordinate system, the angle of the crank throw arrangement $\alpha_j$ minimizing, under the restrictive condition, the n-th power of $|f_k|$, n being an even number.

In the method for determining the angle of the crank throw arrangement according to the present invention, the abovementioned non-dimensional coefficient $f_k$ of the unbalanced force that acts as vibrating force may be practically based on $f_1$ only. This is because, if $f_2$ also is to be minimized at the same time, the restrictive condition becomes too severe to obtain a freedom of solution as well as because, as generally known and also as seen in the actual examples as will be described later, $f_2$ decreases more than in the case of the equal ignition interval or, even if it increases, it is so slight as gives substantially no influence. Hence, $f_2$ may be left unchecked unless it much increases as compared with the case of the equal ignition interval. It is to be noted that the same applies to the internal couple.

Also, in considering the unbalanced force and the unbalanced couple, those of the third order or higher are generally so small as may be neglected.

Also, as the abovementioned objective function $f_1$ itself is not appropriate for searching a solution, it is replaced with $|f_1|^2$.

Then, a sequential solution obtaining routine is carried out by means of a non-linear programming method, such as SQP method or Newton-Raphson method, and a solution can be obtained by the abovementioned method for determining the angle of the crank arrangement.

On the other hand, in the polar coordinate system according to the complex vector of $\exp(ik \cdot \alpha_j)$, formulation of simultaneous equations for obtaining $\alpha_j$ that minimizes $|f_1|^2$ is very difficult and a convergence of the repeated solution obtaining computations is often unsatisfactory to thereby invite a case where no solution is ensured. Thus, translation is made into the orthogonal coordinate system so as to obtain the angle of the crank throw arrangement that minimizes and optimizes $\beta|f_1|^{2p} + \gamma|f_2|^{2q}$ [Here, $\beta$ and $\gamma$ are weighting coefficients (> 0) on $|f_1|^{2p}$ and $\gamma|f_2|^{2q}$ respectively, used in minimizing and optimizing the above equation. p and q are intergers.]. Thereby, the formulation is performed and $\alpha_j$ that minimizes $\beta|f_1|^{2p} + \gamma|f_2|^{2q}$ can be obtained. It is to be noted that, in place of $|f_1|^2$, the n-th power of $|f_1|$, n being an even number, such as $|f_1|^4$, $|f_1|^6$, etc. may be employed. Also, if a coefficient of the third order or higher is to be considered in the above equation, an equation $\sum_k \beta_k |f_k|^{\wedge}(2p_k)$ may be employed [Here, "^" is a designation of power. $\beta_k$

k is a weighting coefficient on $|f_k|^{\wedge}(2p_k)$. $P_k$ is an integer. $\sum_k$ shows the sum up to order k.].

It is to be noted that the above described method is applicable not only to the case where the external couple is to be minimized but also to the case where the vibrating force on which the similar vibration description can be made (internal couple, vibrating force of H·X type vibration, etc.) is to be minimized.

Also, according to the present invention, as a 4-stroke cycle in-line type 7-cylinder or V-type 14 cylinder internal combustion engine or a 2-stroke cycle in-line type 8 cylinder internal combustion engine that has the unbalanced couple acting as vibration force minimized, those engines having the angles of the crank arrangement, as mentioned below, are provided. It is to be noted that the below mentioned angles are given on the basis of the most orthodox examples in which $\beta$=1, p=1, $\gamma$ =0 in the equation of $\beta|f_1|^{2p} + \gamma|f_2|^{2q}$. Also, as to the portion of $s_1$, $s_2$, $\cdots$ , $s_n$, $s_1$, is set to 1 ($s_1$=1) and an arithmetic progression up to $s_n$ is employed. In this respect, the unbalanced force of the first and second orders may be first set to nearly zero, except the case where the above equation is minimized on the condition that the unbalanced force of the first or second order is set to a finite value that is allowed by the surrounding environment where the internal combustion engine is installed.

A 4-stroke cycle 7 cylinder internal combustion engine in which the angles of the crank throw arrangement of other crank throws relative to the reference crank throw are;
+100.26° ±1° , -166.09° ±0.5° ,-112.16° ±0.5°,
-72.98° ±0.5° , +132.89° ±0.5° and +23.96° ±0.5°.

Likewise, a 4-stroke cycle 7 cylinder internal combustion engine in which the angles of the crank throw arrangement of other crank throws relative to the reference crank throw are;
+99.52° ±0.5° ,-154.44° ±0.5° , -96.46° ±0.5° ,
+166.30° ±0.5° , -44.28° ±0.5° and +64.18° ±0.5°.

It is to be noted that the abovementioned angles of the crank arrangement are also applicable to a 4-stroke cycle V-type 14 cylinder internal combustion engine in which a piston/connecting rod arrangement is provided with respect to cylinders of V-banks mutually opposing in one crank throw and, in this case also, the same effect to reduce the vibrating force can be obtained.

Also, according to the present invention, as a 4-stroke cycle in-line type 9 cylinder internal combustion engine that has the unbalanced couple acting as vibrating force minimized, those engines having the angles of the crank arrangement, as follows, are provided.

That is, a 4-stroke cycle 9 cylinder internal combustion engine in which the angles of the crank throw arrangement of other crank throws relative to the reference crank throw are;
+119.71° ±0.5° ,-158.45° ±0.5° ,-118.35° +0.5° ,
+83.19° ±0.5° , -78.36° ±0.5° , -36.42° +0.5° ,
+42.67° ±0.5° and +163.67° ±0.5° .

Likewise, a 4-stroke cycle 9 cylinder internal combustion engine in which the angles of the crank throw arrangement of other crank throws relative to the reference crank throw are;
+80.87° ±2° , -80.73° ±2° , +154.77° ±2° , -155.08° +2° ,
-123.36° ±2° , +121.73° ±2° , -39.13° ±2° and
+37.62° ±2° .

Further, a 4-stroke cycle 9 cylinder internal combustion engine in which the angles of the crank throw arrangement of other crank throws relative to the reference crank throw are;

-117.69° ±3° , +82.24° ±3° , +163.15° ±3° , +126.45° ±3° ,

-74.85° ±3, -31.61° ±3°, -152.00° ±3° and +49.40° ±3° .

Still further, a 4-stroke cycle 9 cylinder internal combustion engine in which the angles of the crank throw arrangement of other crank throws relative to the reference crank throw are;

-117.16° ±0.5° , +83.11° ±0.5° , +165.20° +0.5° ,

+120.44° ±0.5° , -77.68° ±0.5° , -35.46° ±0.5° ,

-158.64° ±0.5° and +44.46° ±0.5° .

It is to be noted that the abovementioned angles of the crank arrangement are also applicable to a 4-stroke cycle V-type 18 cylinder internal combustion engine in which a piston/connecting rod arrangement is provided with respect to cylinders of V-banks mutually opposing in one crank throw and, in this case also, the same effect to reduce the vibrating force can be obtained.

Also, according to the present invention, as a 2-stroke cycle in-line type 8 cylinder internal combustion engine that has the unbalanced couple acting as vibrating force minimized, those engines having the angles of the crank arrangement, as follows, are provided.

That is, a 2-stroke cycle 8 cylinder internal combustion engine in which the angles of the crank throw arrangement of other crank throws relative to the reference crank throw are;

-144.71° ±0.5° , +92.74° ±0.5° , +129.03° ±0.5° ,

-84.22° ±0.5°, -47.94° ±0.5°, -170.49° ±0.5° and

+44.81° ±0.5°.

Likewise, a 2-stroke cycle 8 cylinder internal combustion engine in which the angles of the crank throw arrangement of other crank throws relative to the reference crank throw are;

+87.67° ±0.5°, -95.70° ±0.5°, +172.35° ±0.5°,

-132.50° ±0.5°, +135.55° ±0.5°, -47.82° ±0.5° and

+39.85° ±0.5° .

Further, a 2-stroke cycle 8 cylinder internal combustion engine in which the angles of the crank throw arrangement of other crank throws relative to the reference crank throw are;

+92.80° ±0.5° , -140.66° ±0.5°, -83.55° ±0.5°,

+133.09° ±0.5°,-169.79° ±0.5° , -43.25° ±0.5° and

+49.54° ±0.5°

For each of the abovementioned crank throw arrangements, the total of the deviations shown by ± for each of the angles shall be zero.

If the multi-cylinder internal combustion engines according to the present invention are elastically supported, then an excellent effect can be obtained in reducing the influence of the couple caused by the unbalanced force.

DESCRIPTION OF THE PREFERRED EMBODIMENTS

Herebelow, embodiments according to the method for determining the angle of the crank throw arrangement of the present invention will be concretely described based on actual examples.

(Example 1)

In a 4-stroke cycle 7 cylinder internal combustion engine having the ignition order set to 1-2-3-5-7-6-4, the angle of the crank throw arrangement that suppresses the unbalanced force to the least and minimizes the primary unbalanced couple is obtained. An example of the result thereof is shown in Table 1 in comparison with the case of the equal space arrangement.

As seen in Table 1, such an unequal space arrangement can be obtained that, while the coefficient of the internal couple is suppressed to the nearly same level as in the case of the equal space arrangement, the primary unbalanced couple is largely reduced.

Table 1

| Item | | (a) Equal angle arrangement | (b) Unequal angle arrangement |
|---|---|---|---|
| Angle of crank arrangement | #1 Cylinder | 0°<br>(0° ) | 0°<br>(0° ) |
| | #2 Cylinder | 102.8571°<br>(102.8571° ) | 100.26°<br>(100.26° ) |
| | #3 Cylinder | -154.2857°<br>(205.7143° ) | -166.09°<br>(193.91° ) |
| | #4 Cylinder | -102.8571°<br>(617.1429° ) | -112.16°<br>(607.84° ) |
| | #5 Cylinder | -51.4286°<br>(308.5714° ) | -72.98°<br>(287.02° ) |
| | #6 Cylinder | 154.2857°<br>(514.2857° ) | 132.89°<br>(492.89° ) |
| | #7 Cylinder | 51.4286°<br>(411.4286° ) | 23.96°<br>(383.96° ) |
| Coefficient of unbalanced force (primary) | | 0 | 0.000001 |
| Coefficient of unbalanced force (secondary) | | 0 | 0.000004 |
| Coefficient of unbalanced couple (primary) | | 1.327948 | 0.000047 |
| Coefficient of unbalanced couple (secondary) | | 1.538871 | 0.981520 |
| Coefficient of internal couple | | 2.295961 | 2.404888 |
| Arrangement of ignition order<br><br>Ignition order<br>1-2-3-5-7-6-4 | | | |

(Example 2)

In a 4-stroke cycle 7 cylinder internal combustion engine having the ignition order set to 1-2-3-6-7-5-4, the angle of the crank throw arrangement that suppresses the unbalanced force to the least and minimizes the primary unbalanced couple is obtained. An example of the result thereof is shown in Table 2 in comparison with the case of the equal space arrangement.

As seen in Table 2, such an unequal space arrangement can be obtained that, while the coefficient of the internal couple is suppressed to the nearly same level as in the case of the equal space arrangement, the primary unbalanced couple is largely reduced.

## Table 2

| Item | | (a) Equal angle arrangement | (b) Unequal angle arrangement |
|---|---|---|---|
| Angle of crank arrangement | #1 Cylinder | 0°<br>(0° ) | 0°<br>(0° ) |
| | #2 Cylinder | 102.8571°<br>(102.8571° ) | 99.52°<br>(99.52° ) |
| | #3 Cylinder | -154.2857°<br>(205.7143° ) | -154.44°<br>(205.56° ) |
| | #4 Cylinder | -102.8571°<br>(617.1429° ) | -96.46°<br>(623.54° ) |
| | #5 Cylinder | 154.2857°<br>(514.2857° ) | 166.30°<br>(526.30° ) |
| | #6 Cylinder | -51.4286°<br>(308.5714° ) | -44.28°<br>(315.72° ) |
| | #7 Cylinder | 51.4286°<br>(411.4286° ) | 64.18°<br>(424.18° ) |
| Coefficient of unbalanced force (primary) | | 0 | 0.000002 |
| Coefficient of unbalanced force (secondary) | | 0 | 0.000002 |
| Coefficient of unbalanced couple (primary) | | 0.637613 | 0.000128 |
| Coefficient of unbalanced couple (secondary) | | 2.327454 | 2.670964 |
| Coefficient of internal couple | | 2.368684 | 2.344642 |
| Arrangement of ignition order<br><br>Ignition order<br>1-2-3-6-7-5-4 | | | |

(Example 3)

In a 4-stroke cycle 9 cylinder internal combustion engine having the ignition order set to 1-5-9-4-7-8-2-3-6, the angle of the crank throw arrangement that suppresses the unbalanced force to the least and minimizes the primary unbalanced couple is obtained. An example of the result thereof is shown in Table 3 in comparison with the case of the equal space arrangement.

As seen in Table 3, such an unequal space arrangement can be obtained that, while the coefficient of the internal couple is suppressed to the nearly same level as in the case of the equal space arrangement, the primary unbalanced couple is largely reduced.

## Table 3

| | Item | (a) Equal angle arrangement | (b) Unequal angle arrangement |
|---|---|---|---|
| Angle of crank arrangement | #1 Cylinder | 0°<br>(0° ) | 0°<br>(0° ) |
| | #2 Cylinder | 120°<br>(480° ) | 119.71°<br>(479.71° ) |
| | #3 Cylinder | -160°<br>(560° ) | -158.45°<br>(561.55° ) |
| | #4 Cylinder | -120°<br>(240° ) | -118.35°<br>(241.65° ) |
| | #5 Cylinder | 80°<br>(80° ) | 83.19°<br>(83.19° ) |
| | #6 Cylinder | -80°<br>(640° ) | -78.36°<br>(641.64° ) |
| | #7 Cylinder | -40°<br>(320° ) | -36.42°<br>(323.58° ) |
| | #8 Cylinder | 40°<br>(400° ) | 42.67°<br>(402.67° ) |
| | #9 Cylinder | 160°<br>(160° ) | 163.67°<br>(163.67° ) |
| Coefficient of unbalanced force (primary) | | 0 | 0.000003 |
| Coefficient of unbalanced force (secondary) | | 0 | 0.000002 |
| Coefficient of unbalanced couple (primary) | | 0.126406 | 0.000054 |
| Coefficient of unbalanced couple (secondary) | | 1.576991 | 1.098978 |
| Coefficient of internal couple | | 1.770535 | 1.743647 |
| Arrangement of ignition order<br><br>Ignition order<br>1-5-9-4-7-8-2-3-6 | | | |

(Example 4)

In a 4-stroke cycle 9 cylinder internal combustion engine having the ignition order set to 1-2-4-6-8-9-7-5-3, the angle of the crank throw arrangement that suppresses the unbalanced force to the least and minimizes the primary unbalanced couple is obtained. An example of the result thereof is shown in Table 4 in comparison with the case of the equal space arrangement.

As seen in Table 4, such an unequal space arrangement can be obtained that, while the coefficient of the internal couple is suppressed to the nearly same level as in the case of the equal space arrangement, the primary unbalanced couple is largely reduced.

## Table 4

| Item | | (a) Equal angle arrangement | (b) Unequal angle arrangement |
|---|---|---|---|
| Angle of crank arrangement | #1 Cylinder | 0° (0°  ) | 0° (0°  ) |
| | #2 Cylinder | 80° (80°  ) | 80.87° (80.87°  ) |
| | #3 Cylinder | -80° (640°  ) | -80.73° (639.27°  ) |
| | #4 Cylinder | 160° (160°  ) | 154.77° (154.77°  ) |
| | #5 Cylinder | -160° (560°  ) | -155.08° (564.92°  ) |
| | #6 Cylinder | -120° (240°  ) | -123.36° (236.64°  ) |
| | #7 Cylinder | 120° (480°  ) | 121.73° (481.73°  ) |
| | #8 Cylinder | -40° (320°  ) | -39.13° (320.87°  ) |
| | #9 Cylinder | 40° (400°  ) | 37.62° (397.62°  ) |
| Coefficient of unbalanced force (primary) | | 0 | 0.000001 |
| Coefficient of unbalanced force (secondary) | | 0 | 0.000003 |
| Coefficient of unbalanced couple (primary) | | 0.193665 | 0.000257 |
| Coefficient of unbalanced couple (secondary) | | 0.547683 | 0.692746 |
| Coefficient of internal couple | | 4.145429 | 4.142307 |
| Arrangement of ignition order  Ignition order 1-2-4-6-8-9-7-5-3 | | | |

(Example 5)

In a 4-stroke cycle 9 cylinder internal combustion engine having the ignition order set to 1-3-4-2-7-9-5-8-6, the angle of the crank throw arrangement that suppresses the unbalanced force to the least and minimizes the primary unbalanced couple is obtained. An example of the result thereof is shown in Table 5 in comparison with the case of the equal space arrangement.

As seen in Table 5, such an unequal space arrangement can be obtained that, while the coefficient of the internal couple is suppressed to the nearly same level as in the case of the equal space arrangement, the primary unbalanced couple is largely reduced.

**11**

Table 5

| Item | | (a) Equal angle arrangement | (b) Unequal angle arrangement |
|---|---|---|---|
| Angle of crank arrangement | #1 Cylinder | 0°<br>(0° ) | 0°<br>(0° ) |
| | #2 Cylinder | -120°<br>(240° ) | -117.69°<br>(242.31° ) |
| | #3 Cylinder | 80°<br>(80° ) | 82.24°<br>(82.24° ) |
| | #4 Cylinder | 160°<br>(160° ) | 163.15°<br>(163.15° ) |
| | #5 Cylinder | 120°<br>(480° ) | 126.45°<br>(486.45° ) |
| | #6 Cylinder | -80°<br>(640° ) | -74.85°<br>(645.15° ) |
| | #7 Cylinder | -40°<br>(320° ) | -31.61°<br>(328.39° ) |
| | #8 Cylinder | -160°<br>(560° ) | -152.00°<br>(567.00° ) |
| | #9 Cylinder | 40°<br>(400° ) | 49.40°<br>(409.40° ) |
| Coefficient of unbalanced force (primary) | | 0 | 0.000001 |
| Coefficient of unbalanced force (secondary) | | 0 | 0.000006 |
| Coefficient of unbalanced couple (primary) | | 0.440977 | 0.000112 |
| Coefficient of unbalanced couple (secondary) | | 1.366652 | 1.703239 |
| Coefficient of internal couple | | 2.372107 | 2.339584 |
| Arrangement of ignition order<br><br>Ignition order<br>1-3-4-2-7-9-5-8-6 | | | |

(Example 6)

In a 4-stroke cycle 9 cylinder internal combustion engine having the ignition order set to 1-3-4-2-7-9-5-8-6, the angle of the crank throw arrangement that suppresses the unbalanced force to the least and minimizes the primary unbalanced couple is obtained. An example of the result thereof is shown in Table 6 in comparison with the case of the equal space arrangement.

As seen in Table 6, such an unequal space arrangement can be obtained that, while the coefficient of the internal couple is suppressed to the nearly same level as in the case of the equal space arrangement, the primary unbalanced couple is largely reduced.

Table 6

| Item | | (a) Equal angle arrangement | (b) Unequal angle arrangement |
|---|---|---|---|
| Angle of crank arrangement | #1 Cylinder | 0° (0° ) | 0° (0° ) |
| | #2 Cylinder | -120° (240° ) | -117.16° (242.84° ) |
| | #3 Cylinder | 80° (80° ) | 83.11° (83.11° ) |
| | #4 Cylinder | 160° (160° ) | 165.20° (165.20° ) |
| | #5 Cylinder | 120° (480° ) | 120.44° (480.44° ) |
| | #6 Cylinder | -80° (640° ) | -77.68° (642.32° ) |
| | #7 Cylinder | -40° (320° ) | -35.46° (324.54° ) |
| | #8 Cylinder | -160° (560° ) | -158.64° (561.36° ) |
| | #9 Cylinder | 40° (400° ) | 44.46° (404.46° ) |
| Coefficient of unbalanced force (primary) | | 0 | 0.000435 |
| Coefficient of unbalanced force (secondary) | | 0 | 0.000922 |
| Coefficient of unbalanced couple (primary) | | 0.440977 | 0.000054 |
| Coefficient of unbalanced couple (secondary) | | 1.366652 | 1.558243 |
| Coefficient of internal couple | | 2.372107 | 2.342275 |
| Arrangement of ignition order<br><br>Ignition order 1-3-4-2-7-9-5-8-6 | | | |

(Example 7)

In a 2-stroke cycle 8 cylinder internal combustion engine having the ignition order set to 1-8-3-4-7-2-5-6, the angle of the crank throw arrangement that suppresses the unbalanced force to the least and minimizes the primary unbalanced couple is obtained. An example of the result thereof is shown in Table 7 in comparison with the case of the equal space arrangement.

As seen in Table 7, such an unequal space arrangement can be obtained that, while the coefficient of the internal couple is suppressed to the nearly same level as in the case of the equal space arrangement, the primary unbalanced couple is largely reduced.

## Table 7

| | Item | (a) Equal angle arrangement | (b) Unequal angle arrangement |
|---|---|---|---|
| Angle of crank arrangement | #1 Cylinder | 0° (0° ) | 0° (0° ) |
| | #2 Cylinder | -135° (225° ) | -144.71° (215.29° ) |
| | #3 Cylinder | 90° (90° ) | 92.74° (92.74° ) |
| | #4 Cylinder | 135° (135° ) | 129.03° (129.03° ) |
| | #5 Cylinder | -90° (270° ) | -84.22° (275.78° ) |
| | #6 Cylinder | -45° (315° ) | -47.94° (312.06° ) |
| | #7 Cylinder | 180° (180° ) | -170.49° (189.51° ) |
| | #8 Cylinder | 45° (45° ) | 44.81° (44.81° ) |
| Coefficient of unbalanced force (primary) | | 0 | 0.000001 |
| Coefficient of unbalanced force (secondary) | | 0 | 0.000003 |
| Coefficient of unbalanced couple (primary) | | 0.896683 | 0.000065 |
| Coefficient of unbalanced couple (secondary) | | 0 | 1.405978 |
| Coefficient of internal couple | | 1.439940 | 1.328977 |
| Arrangement of ignition order<br><br>Ignition order 1-8-3-4-7-2-5-6 | | | |

(Example 8)

In a 2 stroke cycle 8 cylinder internal combustion engine having the ignition order set to 1-8-2-6-4-5-3-7, the angle of the crank throw arrangement that suppresses the unbalanced force to the least and minimizes the primary unbalanced couple is obtained. An example of the result thereof is shown in Table 8 in comparison with the case of the equal space arrangement.

As seen in Table 8, such an unequal space arrangement can be obtained that, while the coefficient of the internal couple is suppressed to the nearly same level as in the case of the equal space arrangement, the primary unbalanced couple is largely reduced.

Table 8

| | Item | (a) Equal angle arrangement | (b) Unequal angle arrangement |
|---|---|---|---|
| Angle of crank arrangement | #1 Cylinder | 0° (0° ) | 0° (0° ) |
| | #2 Cylinder | 90° (90° ) | 87.67° (87.67° ) |
| | #3 Cylinder | -90° (270° ) | -95.70° (264.30° ) |
| | #4 Cylinder | 180° (180° ) | 172.35° (172.35° ) |
| | #5 Cylinder | -135° (225° ) | -132.50° (227.50° ) |
| | #6 Cylinder | 135° (135° ) | 135.55° (135.55° ) |
| | #7 Cylinder | -45° (315° ) | -47.82° (312.18° ) |
| | #8 Cylinder | 45° (45° ) | 39.85° (39.85° ) |
| Coefficient of unbalanced force (primary) | | 0 | 0 |
| Coefficient of unbalanced force (secondary) | | 0 | 0.000001 |
| Coefficient of unbalanced couple (primary) | | 0.448342 | 0.000121 |
| Coefficient of unbalanced couple (secondary) | | 0 | 0.538570 |
| Coefficient of internal couple | | 3.154485 | 3.146231 |
| Arrangement of ignition order<br><br>Ignition order 1-8-2-6-4-5-3-7 | | | |

(Example 9)

In a 2-stroke cycle 8 cylinder internal combustion engine having the ignition order set to 1-8-2-5-6-3-4-7, the angle of the crank throw arrangement that suppresses the unbalanced force to the least and minimizes the primary unbalanced couple is obtained. An example of the result thereof is shown in Table 9 in comparison with the case of the equal space arrangement.

As seen in Table 9, such an unequal space arrangement can be obtained that, while the coefficient of the internal couple is suppressed to the nearly same level as in the case of the equal space arrangement, the primary unbalanced couple is largely reduced.

Table 9

| Item | | (a) Equal angle arrangement | (b) Unequal angle arrangement |
|---|---|---|---|
| Angle of crank arrangement | #1 Cylinder | 0° (0° ) | 0° (0° ) |
| | #2 Cylinder | 90° (90° ) | 92.80° (92.80° ) |
| | #3 Cylinder | -135° (225° ) | -140.66° (219.34° ) |
| | #4 Cylinder | -90° (270° ) | -83.55° (276.45° ) |
| | #5 Cylinder | 135° (135° ) | 133.09° (133.09° ) |
| | #6 Cylinder | 180° (180° ) | -169.79° (190.21° ) |
| | #7 Cylinder | -45° (315° ) | -43.25° (316.75° ) |
| | #8 Cylinder | 45° (45° ) | 49.54° (49.54° ) |
| Coefficient of unbalanced force (primary) | | 0 | 0.000001 |
| Coefficient of unbalanced force (secondary) | | 0 | 0.000001 |
| Coefficient of unbalanced couple (primary) | | 0.131316 | 0.000065 |
| Coefficient of unbalanced couple (secondary) | | 1.414214 | 0.200722 |
| Coefficient of internal couple | | 2.639656 | 2.528273 |
| Arrangement of ignition order<br><br>Ignition order<br>1-8-2-5-6-3-4-7 | | | |

In the above, while the embodiments according to the present invention have been concretely described based on the actual examples, the invention is not limited to the mentioned examples but may be added with certain deviations. For example, as to the angles obtained in the Examples 1 to 3 and 6 to 9, if the deviations are within ±0.5° on these angles, a multi-cylinder internal combustion engine that has the unbalanced couple, acting as the vibrating force, reduced to a nearly satisfactory extent can be obtained.

Also, if the deviations are within ±2° on the angles obtained in the Example 4 and within ±3° on the angles obtained in the Example 5, then, respectively, a multi-cylinder internal combustion engine that has the unbalanced couple, acting as the vibrating force, reduced to a nearly satisfactory extent can be obtained.

As a summary, according to the present invention, provided is a method for determining an angle of a crank arrangement in a multi-cylinder reciprocating internal combustion engine, comprising the steps of:

where;

$F_j$ is an unbalanced force of order m of each cylinder in the multi-cylinder reciprocating internal combustion engine (having the number of crank throws of n) and is represented by;

$$F_j = F_m \cdot \exp(i_m \alpha_j)$$

(Here, $F_m$ is a size of the unbalanced force of order m, $i=(-1)^{1/2}$ and $\alpha_j$ is an angle of the crank throw of number j, j being 1, 2, $\cdots$, n.),

$F_{(m)}$ is the sum of the unbalanced force of order m that acts as vibrating force and is represented by;

$$F_{(m)} = F_m[1 \ 1 \ \cdots \ 1][\exp(im \cdot \alpha_1) \ \exp(im \cdot \alpha_2) \ \cdots \ \exp(im \cdot \alpha_n)]^t = F_m \cdot g_m$$

(Here, m is the number or numbers of order or orders of the unbalanced force that is wanted to fall within an allowable range, for example 1 and 2, and t is a designation of a turned matrix.) and

$|g_m|$ is an absolute value of a non-dimensional coefficient of the unbalanced force, that is obtained by $F_{(m)}$ being divided by $F_m$, and is represented by;

$$|g_m| = abs\{ [1 \ 1 \cdots \ 1] \ [\exp(im \cdot \alpha_1) \ \exp(im \cdot \alpha_2) \ \cdots \ \exp(im \cdot \alpha_n)]^t \} \ ;$$

setting a restrictive condition in which $|g_m|$ is made zero or is endlessly approached to zero or is set to or within a finite value that is allowed by the surrounding environment where the engine is installed, and

where;

$M_{(k)}$ is an unbalanced couple that is expressed by the unbalanced force of order k of each crank throw, weighted by distance L between each cylinder, and is represented by;

$$M_{(k)} = F_k L[s_1 \ s_2 \ \cdots \ s_n][\exp(ik \cdot \alpha_1) \ \exp(ik \cdot \alpha_2) \ \cdots \ \exp(ik \cdot \alpha_n)]^t = F_k L \cdot f_k$$

(Here, $s_j$ is a non-dimensional coordinate in the crank shaft direction of the crank throw of number j. If the crank throw of number j is the reference crank throw, $s_j=0$.) and

$|f_k|$ is an absolute value of a non-dimensional coefficient of the unbalanced couple, that is obtained by $M_{(k)}$ being divided by $F_k L$, and is represented by;

$$|f_k| = abs\ \{ \ [s_1 \ s_2 \ \cdots \ s_n][\exp(ik \cdot \alpha_1) \ \exp(ik \cdot \alpha_2) \ \cdots \ \exp(ik \cdot \alpha_n)]^t \ \} \ ;$$

obtaining an angle of the crank throw arrangement $\alpha_j$ by an expression on an orthogonal coordinate system, the angle of the crank throw arrangement $\alpha_j$ minimizing, under the restrictive condition, the n-th power of $|f_k|$, n being an even number, or the sum of the n-th power of $|f_k|$ that is weight.

In the present invention, in the unequally spaced crank arrangement in which the unbalanced force $F_{(m)}$ (vector) does not generally become zero, such a condition is set that the unbalanced force and the internal couple fall within an allowable range in the environment where the engine is used. Then, where $|f_k|$ is an absolute value of the coefficient (non-dimensional) of the unbalanced couple that is not dependent on the engine specification and is represented by;

$$|f_k| = \text{abs}\{[s_1 \ s_2 \ \cdots \ s_n][\exp(ik \cdot \alpha_1) \ \exp(ik \cdot \alpha_2) \ \cdots \ \exp(ik \cdot \alpha_n)]^t\},$$

formulation is made so as to obtain a solution as a matter of non-linear optimization problem by minimizing the n-th power of $|f_k|$, n being an even number, or minimizing the sum of the n-th power of $|f_k|$ that is weighted. The solution is obtained on the orthogonal coordinate system and the optimal angles of the crank arrangement are obtained. Thereby, the unbalanced couple that acts as vibrating force can be reduced and the mentioned non-linear optimization problem is solved with respect to the multi-cylinders of the engine so that the optimized solution can be obtained.

According to the present invention, a multi-cylinder internal combustion engine that has the unbalanced couple acting as the vibrating force minimized can be provided. It is to be noted that the method of the present invention is applicable not only to the case where the external couple is to be minimized but also to the case where the vibrating force on which the similar vibration description can be made (such as internal couple, vibrating force of H·X type vibration, etc.) is to be minimized.

**Claims**

1. A method of providing a crank throw arrangement of each cylinder in a multi-cylinder reciprocating internal combustion engine, said method comprising a method of determining at least one of the angles of the relative arrangement between each cylinder, i.e. at least one of the angles of said crank throw arrangement so that an unbalanced couple acting as vibrating force is minimized, said method of determining said angle comprising the steps of:

    setting a restrictive condition in which $|g_m|$ is made zero or is endlessly approached to zero or is set to or within a finite value that is allowed by the surrounding environment

where the engine is installed,
where
$F_j$ is an unbalanced force of order m of each cylinder in the multi-cylinder reciprocating internal combustion engine having the number of crank throws of n and is represented by;

$$F_j = F_m \cdot \exp(i_m \alpha_j),$$

$F_m$ being a size of the unbalanced force of order m, $i = (-1)^{1/2}$ and $\alpha_j$ being an angle of the crank throw of number j, j being 1, 2, ·····, n.
$F_{(m)}$ is the sum of the unbalanced force of order m that acts as vibrating force of the entire engine and is represented by;

$$F_{(m)} = F_m[1 \ 1 \cdot \cdot 1][\exp(im \cdot \alpha_1) \exp(im \cdot \alpha_2) \cdot \cdot \cdot \exp(im \cdot \alpha_n)]^t = F_m \cdot g_m$$

, m being the number or numbers of order or orders of the unbalanced force that is wanted to fall within an allowable range, for example 1 and 2, and t being a designation of a turned matrix and
$|g_m|$ is an absolute value of a non-dimensional coefficient of the unbalanced force, that is obtained by $F_{(m)}$ being divided by $F_m$, and is represented by;

$$|g_m| = \text{abs}\{[1 \ 1 \cdot \cdot \cdot 1][\exp(im \cdot \alpha_1) \exp(im \cdot \alpha_2) \cdot \cdot \cdot \exp(im \cdot \alpha_n)]^t\};$$

obtaining said angle of said crank throw arrangement $\alpha_j$ by an expression on an orthogonal coordinate system, said angle of the crank throw arrangement $\alpha_j$ minimizing, under said restrictive condition, the n-th power of $|f_k|$, n being an even number;
where
$M_{(k)}$ is an unbalanced couple that is expressed by the unbalanced force of order k of each crank throw, weighted by distance L between each cylinder, and is represented by;

$$M_{(k)} = F_k L [s_1 \ s_2 \cdots s_n] [\exp(ik \cdot \alpha_1) \ \exp(ik \cdot \alpha_2) \cdots \exp(ik \cdot \alpha_n)]^t = F_k L \cdot f_k$$

with $s_j$ being a non-dimensional coordinate in the crank shaft direction of the crank throw of number j and $|f_k|$ is an absolute value of a non-dimensional coefficient of the unbalanced couple, that is obtained by $M_{(k)}$ being divided by $F_k L$, and is represented by;

$$|f_k| = abs\{[s_1 \ s_2 \cdots s_n] [\exp(ik \cdot \alpha_1) \exp(ik \cdot \alpha_2) \cdots \exp(ik \cdot \alpha_n)]^t\}.$$

2. A method of providing a crank throw arrangement of each cylinder in a multi-cylinder reciprocating internal combustion engine, said method comprising a method of determining at least one of the angles of relative arrangement between each cylinder, i.e. at least one of the angles of said crank throw arrangement so that an unbalanced couple acting as vibrating force is minimized, said method of determining said angle comprising the steps of:

setting a restrictive condition in which $|g_m|$ is made zero or is endlessly approached to zero or is set to or within a finite value that is allowed by the surrounding environment

where the engine is installed,
where
$F_j$ is an unbalanced force of order m of each cylinder in the multi-cylinder reciprocating internal combustion engine having the number of crank throws of n and is represented by;

$$F_j = F_m \cdot \exp(im\alpha j)$$

, $F_m$ being a size of the unbalanced force of order m, $i = (-1)^{1/2}$ and $\alpha_j$ being an angle of the crank throw of number j, j being 1, 2, ……, n,
$F_{(m)}$ is the sum of the unbalanced force of order m that acts as vibrating force of the entire engine and is represented by;

$$F_{(m)} = F_m [1 \ 1 \cdots 1] [\exp(im \cdot \alpha_1) \exp(im \cdot \alpha_2) \cdots \exp(im \cdot \alpha_n)]^t = F_m \cdot g_m,$$

m being the number or numbers of order or orders of the unbalanced force that is wanted to fall within an allowable range, for example 1 and 2, and t being a designation of a turned matrix and
$|g_m|$ is an absolute value of a non-dimensional coefficient of the unbalanced force, that is obtained by $F_{(m)}$ being divided by $F_m$, and is represented by;

$$\left|g_m\right| = abs\{[1 \ 1 \cdots 1] [\exp(im \cdot \alpha_1) \exp(im \cdot \alpha_2) \cdots \exp(im \cdot \alpha_n)]^t\};$$

obtaining said angle of said crank throw arrangement $\alpha_j$ by an expression on an orthogonal coordinate system, said angle of the crank throw arrangement $\alpha_j$ minimizing, under said restrictive condition, said sum

$$\sum_k \beta_k |f_k| \wedge (2p_k);$$

where
$M_{(k)}$ is an unbalanced couple that is expressed by the unbalanced force of order k of each crank throw, weighted by distance L between each cylinder, and is represented by;

$$M_{(k)} = F_k L [s_1 \ s_2 \cdots s_n] [\exp(ik \cdot \alpha_1) \exp(ik \cdot \alpha_2) \cdots \exp(ik \cdot \alpha_n)]^t = F_k L \cdot f_k$$

$s_j$ being a non-dimensional coordinate in the crank shaft direction of the crank throw of number j,
$|f_k|$ is an absolute value of a non-dimensional coefficient of the unbalanced couple, that is obtained by $M_{(k)}$ being

divided by $F_kL$, and is represented by;

$$|f_k| = \text{abs}\{[s_1 \ s_2 \cdots s_n][\exp(ik \cdot \alpha_1)\exp(ik \cdot \alpha_2)\cdots\exp(ik \cdot \alpha_n)]^t\}$$

and the sum of the n-th power of $|f_k|$, n being an even number, said n-th power of $|f_k|$ being weighted, is represented by;

$$\sum_k \beta_k |f_k| \wedge (2p_k) ,$$

"^" being a designation of power, $\beta$ being a weighting coefficient of order $k_g$ $P_k$, being an integer, is a power of order k.

3. A 4-stroke cycle in-line type 7 cylinder or V-type 14 cylinder internal combustion engine having an angle of a crank throw arrangement of each cylinder being determined according to claim 1 or 2, **characterized in that** a crank throw of a front end or a rear end of a crank shaft is defined a reference crank throw, angles of the crank throw arrangement of other crank throws relative to the reference crank throw are set to +100.26° ±1°, -166.09° ±0.5°, -112.16° ±0.5°, -72.98° ±0.5°, +132.89° ±0.5° and +23.96° ±0.5° in the order counted from the reference crank throw, provided that the total of the deviations shown by ± relative to each of said angles shall be zero.

4. A 4-stroke cycle in-line type 7 cylinder or V-type 14 cylinder internal combustion engine having an angle of a crank throw arrangement of each cylinder being determined according to claim 1 or 2, **characterized in that** a crank throw of a front end or a rear end of a crank shaft is defined a reference crank throw, angles of the crank throw arrangement of other crank throws relative to the reference crank throw are set to +99.52° ±0.5°, -154.44° ±0.5°, -96.46° ±0.5°, +166.30° ±0.5°, -44.28° ±0.5° and +64.18° ±0.5° in the order counted from the reference crank throw, provided that the total of the deviations shown by ± relative to each of said angles shall be zero.

5. A 4-stroke cycle in-line type 9 cylinder or V-type 18 cylinder internal combustion engine having an angle of a crank throw arrangement of each cylinder being determined according to claim 1 or 2, **characterized in that** a crank throw of a front end or a rear end of a crank shaft is defined a reference crank throw, angles of the crank throw arrangement of other crank throws relative to the reference crank throw are set to +119.71° ±0.5°, -158.45° ±0.5°, -118.35° ±0.5°, +83.19° ±0.5°, -78.36° ±0.5°, -36.42° ±0.5°, +42.67° ± 0.5° and +163.67° ±0.5° in the order counted from the reference crank throw, provided that the total of the deviations shown by ± relative to each of said angles shall be zero.

6. A 4-stroke cycle in-line type 9 cylinder or V-type 18 cylinder internal combustion engine having an angle of a crank throw arrangement of each cylinder being determined according to claim 1 or 2, **characterized in that** a crank throw of a front end or a rear end of a crank shaft is defined a reference crank throw, angles of the crank throw arrangement of other crank throws relative to the reference crank throw are set to +80.87° ±2°, -80.73° ±2°, +154.77° ±2°, -155.08° ±2°, -123.36° ±2°, +121.73° ±2°, -39.13° ±2° and +37.62° ±2° in the order counted from the reference crank throw, provided that the total of the deviations shown by ± relative to each of said angles shall be zero.

7. A 4-stroke cycle in-line type 9 cylinder or V-type 18 cylinder internal combustion engine having an angle of a crank throw arrangement of each cylinder being determined according to claim 1 or 2, **characterized in that** a crank throw of a front end or a rear end of a crank shaft is defined a reference crank throw, angles of the crank throw arrangement of other crank throws relative to the reference crank throw are set to -117.69° ±3°, +82.24° ±3°, +163.15° ±3°, +126.45° ± 3°, -74.85° ±3°, -31.61° ±3°, -152.00° ±3° and +49.40° ±3° in the order counted from the reference crank throw, provided that the total of the deviations shown by ± relative to each of said angles shall be zero.

8. A 4-stroke cycle in-line type 9 cylinder or V-type 18 cylinder internal combustion engine having an angle of a crank throw arrangement of each cylinder being determined according to claim 1 or 2, **characterized in that** a crank throw of a front end or a rear end of a crank shaft is defined a reference crank throw, angles of the crank throw arrangement of other crank throws relative to the reference crank throw are set to -117.16° ±0.5°, +83.11° ±0.5°, +165.20° ±0.5°, +120.44° ±0.5°, -77.68° ±0.5°, -35.46° ±0.5°, -158.64° ±0.5° and +44.46° ±0.5° in the order counted from the reference crank throw, provided that the total of the deviations shown by ± relative to each of said angles shall be zero.

9. A 2-stroke cycle in-line type 8 cylinder internal combustion engine having an angle of a crank throw arrangement of each cylinder being determined according to claim 1 or 2, **characterized in that** a crank throw of a front end or a rear end of a crank shaft is defined a reference crank throw, the angles of the crank throw arrangement of other crank throws relative to the reference crank throw are set to -144.71° $\pm$0.5°, +92.74° $\pm$0.5°, +129.03° $\pm$0.5°, -84.22° $\pm$0.5°, -47.94° $\pm$ 0.5°, -170.49° $\pm$0.5° and +44.81° $\pm$0.5° in the order counted from the reference crank throw, provided that the total of the deviations shown by $\pm$ relative to each of said angles shall be zero.

10. A 2-stroke cycle in-line type 8 cylinder internal combustion engine having an angle of a crank throw arrangement of each cylinder being determined according to claim 1 or 2, **characterized in that** a crank throw of a front end or a rear end of a crank shaft is defined a reference crank throw, the angles of the crank throw arrangement of other crank throws relative to the reference crank throw are set to +87.67° $\pm$0.5°, -95.70° $\pm$0.5°, +172.35° $\pm$0.5°, -132.50° $\pm$0.5°, +135.55° $\pm$0.5°, -47.82° $\pm$0.5° and +39.85° $\pm$0.5° in the order counted from the reference crank throw, provided that the total of the deviations shown by $\pm$ relative to each of said angles shall be zero.

11. A 2-stroke cycle in-line type 8 cylinder internal combustion engine having an angle of a crank throw arrangement each cylinder being determined according to claim 1 or 2, **characterized in that** a crank throw of a front end or a rear end of a crank shaft is defined a reference crank throw, the angles of the crank throw arrangement of other crank throws relative to the reference crank throw are set to +92.80° $\pm$0.5°, -140.66° $\pm$0.5°, -83.55° $\pm$0.5°, +133.09° $\pm$0.5°, -169.79° $\pm$0.5°, -43.25° $\pm$0.5° and +49.54° $\pm$0.5° in the order counted from the reference crank throw, provided that the total of the deviations shown by $\pm$ relative to each of said angles shall be zero.

12. Arrangement of a 4-stroke cycle in-line type 7 cylinder or V-type 14 cylinder internal combustion engine as claimed in Claim 3 or 4, **characterized in that** said engine is elastically supported relative to a support structure of said engine.

13. Arrangement of a 4-stroke cycle in-line type 9 cylinder or V-type 18 cylinder internal combustion engine as claimed in any one of Claims 5 to 8, **characterized in that** said engine is elastically supported to a support structure of said engine.

14. Arrangement of a 2-stroke cycle in-line type 8 cylinder internal combustion engine as claimed in any one of Claims 9 to 11, **characterized in that** it said engine elastically supported to a support structure of said engine.

**Patentansprüche**

1. Verfahren zur Bereitstellung einer Kurbelwellenkröpfungsanordnung jedes Zylinders in einem Mehrzylinder-Hubkolbenmotor, wobei das Verfahren ein Verfahren zum Bestimmen mindestens eines der Winkel der relativen Anordnung zwischen jedem Zylinder, d.h. mindestens eines der Winkel der KurbelwellenKröpfungsanordnung, umfasst, sodass ein als Vibrationskraft wirkendes unausgeglichenes Moment minimiert wird, wobei das Verfahren zum Bestimmen des Winkels die folgenden Schritte umfasst:

- Festlegen einer einschränkenden Bedingung, in welcher $|g_m|$ Null gemacht wird oder unendlich nah an Null angenähert wird oder auf einen oder innerhalb eines endlichen Werts festgelegt wird, der von der Umgebung, wo der Motor installiert ist, erlaubt ist,

wobei
$F_j$ eine unausgeglichene Kraft m-ter Ordnung jedes Zylinders im Mehrzylinder-Hubkolbenmotor mit einer Anzahl von Kurbelwellenkröpfungen von n ist und dargestellt wird durch:

$$F_j = F_m * \exp(i_m \alpha_j),$$

wobei $F_m$ eine Größe der unausgeglichenen Kraft der m-ten Ordnung ist, i = $(-1)^{1/2}$ ist und $\alpha_j$ ein Winkel der Kurbelwellenkröpfung Nr. j ist, wobei j = 1, 2, ..., n ist,
$F_{(m)}$ die Summe der unausgeglichenen Kraft der m-ten Ordnung ist, die als Vibrationskraft des gesamten Motors wirkt und dargestellt wird durch:

$$F_{(m)} = F_m [1\ 1...1][\exp(im * \alpha_1)\ \exp(im * \alpha_2)\ ...\ \exp(im * \alpha_n)]^t = F_m * g_m,$$

wobei m die Zahl oder die Zahlen der Ordnung oder der Ordnungen der unausgeglichenen Kraft ist, von der man will, dass sie innerhalb eines erlaubten Bereichs fällt, z.B. 1 und 2, und wobei t eine Bezeichnung einer transpornierten Matrix ist und

$|g_m|$ ein Absolutwert eines dimensionslosen Koeffizienten der unausgeglichenen Kraft ist, der dadurch erhalten wird, dass $F_{(m)}$ durch $F_m$ geteilt wird, und der dargestellt ist durch:

$$|g_m| = abs\ \{[1\ 1\ ...\ 1][\exp(im * \alpha_1)\ \exp(im * \alpha_2)\ ...\ \exp(im * \alpha_n)]^t\};$$

Erhalten des Winkels der Kurbelwellenkröpfungsanordnung $\alpha_j$ durch einen Ausdruck auf einem orthogonalen Koordinatensystem, wobei der Winkel der Kurbelwellenkröpfungsanordnung $\alpha_j$ unter der einschränkenden Bedingung die n-te Potenz von $|f_k|$ minimiert, wobei n eine gerade Zahl ist;
wobei
$M_{(k)}$ ein unausgeglichenes Moment ist, das durch die unausgeglichene Kraft k-ten Grades jeder Kurbelwellenkröpfung ausgedrückt wird, gewichtet mit dem Abstand L zwischen jedem Zylinder, und dargestellt wird durch:

$$M_{(k)} = F_k L[s_1\ s_2\ ...\ s_n][\exp(ik*\alpha_1)\ \exp(ik*\alpha_2)\ ...\ \exp(ik*\alpha_{n]})]^t = F_k L * f_k,$$

wobei $s_j$ eine dimensionslose Koordinate in der Kurbelwellenrichtung der Kurbelwellenkröpfung Nr. j ist und $|f_k|$ ein Absolutwert eines dimensionslosen Koeffizienten des unausgeglichenen Moments ist, der erhalten wird, indem $M_{(k)}$ durch $F_k L$ geteilt wird, und der dargestellt ist durch:

$$|f_k| = abs\{[s_1\ s_2\ ...s_n][\exp(ik*\alpha_1)\ \exp(ik*\alpha_2)\ ...\ \exp(ik*\alpha_n)]^t\}.$$

2. Verfahren zum Bereitstellen einer Kurbelwellenkröpfungsanordnung jedes Zylinders in einem Mehrzylinderhubkolbenmotor, wobei das Verfahren ein Verfahren zum Bestimmen von mindestens einem der Winkel der Relativanordnung zwischen jedem Zylinder, d.h. mindestens einem der Winkel der Kurbelwellenkröpfungsanordnung, umfasst, sodass ein als Vibrationskraft wirkendes unausgeglichenes Moment minimiert wird, wobei das Verfahren zum Bestimmen des Winkels die folgenden Schritte umfasst:

   - Festlegen einer einschränkenden Bedingung, in welcher $|g_m|$ Null gemacht wird oder unendlich an Null angenähert wird oder auf einen oder innerhalb eines endlichen Werts festgelegt wird, der von der Umgebung, wo der Motor installiert ist, erlaubt ist,

   wobei
   $F_j$ eine unausgeglichene Kraft n-ter Ordnung jedes Zylinders in dem Mehrzylinder-Hubkolbenmotor mit einer Zahl von Kurbelwellenkröpfungen von n ist und dargestellt wird durch:

$$F_j = F_m * \exp(i_m \alpha_j)$$

wobei $F_m$ eine Größe der unausgeglichenen Kraft m-ten Grades ist, $i = (-1)^{1/2}$ ist und $\alpha_j$ ein Winkel der Kurbelwellenkröpfung Nr. j ist, wobei j 1, 2, ..., n ist,

wobei $F_{(m)}$ die Summe der unausgeglichenen Kraft m-ten Grades ist, die als Vibrationskraft des gesamten Motors wirkt und dargestellt wird durch:

$$F_{(m)} = F_m [1\ 1\ ...\ 1][\exp(im*\alpha_1)\ \exp(im*\alpha_2)\ ...\ \exp(im*\alpha_n)]^t = F_m*g_m,$$

wobei m die Zahl oder Zahlen der Ordnung oder der Ordnungen der unausgeglichenen Kraft ist, von der man will, dass sie innerhalb eines erlaubten Bereichs fällt, z.B. 1 und 2, und t eine Bezeichnung einer transponierten Matrix ist, und

$|g_m|$ ein Absolutwert eines dimensionslosen Koeffizienten der unausgeglichenen Kraft ist, der erhalten wird, indem man $F_{(m)}$ durch $F_m$ teilt, und der dargestellt wird, durch:

$$|g_m| = abs\{[1\ 1\ ...\ 1][\exp(im*\alpha_1)\ \exp(im*\alpha_2)\ ...\ \exp(im*\alpha_n)]^t\};$$

- Erhalten des Winkels der Kurbelwellenkröpfungsanordnung $\alpha_j$ durch einen Ausdruck auf einem orthogonalen Koordinatensystem, wobei der Winkel der Kurbelwellenkröpfungsanordnung $\alpha_j$ unter der einschränkenden Bedingung die Summe $\sum_k \beta_k |f_k| \wedge (2p_k)$ minimiert;

wobei

M(k) ein unausgeglichenes Moment ist, das durch die unausgeglichene Kraft k-ten Grades jeder Kurbelwellenkröpfung ausgedrückt wird, gewichtet mit dem Abstand L zwischen jedem Zylinder, und dargestellt wird durch:

$$M_{(k)} = F_k L [s_1\ s_2\ ...\ s_n][\exp(ik*\alpha_1)\exp(ik*\ \alpha_2)...\ \exp(ik*\alpha_n)]^t = F_k L * f_k,$$

wobei $s_j$ eine dimensionslose Koordinate in der Kurbelwellenrichtung der Kurbelwellenkröpfung j ist,

$|f_k|$ ein Absolutwert eines dimensionslosen Koeffizienten des unausgeglichenen Moment ist, der erhalten wird, indem $M_{(k)}$ durch $F_k L$ geteilt wird, und der dargestellt wird durch:

$$|f_k| = abs\{[s_1\ s_2\ ...\ s_n][\exp(ik*\alpha_1)\exp(ik*\ \alpha_2)...\ \exp(ik*\alpha_n)]^t\}\ ;$$

und die Summe der n-ten Potenz von $|f_k|$, wobei n eine gerade Zahl ist und die n-te Potenz von $|f_k|$ gewichtet ist, dargestellt wird, durch:

$$\sum_k \beta_k |f_k| \wedge (2p_k)$$

wobei "$\wedge$" die Bezeichnung einer Potenz ist, $\beta$ ein Gewichtungskoeffizient k-ten Grades ist, und $p_k$, da es eine ganze Zahl ist, eine Potenz k-ten Grades ist.

**EP 1 333 192 B1**

3. Viertaktzyklus-Reihen-7-Zylinder oder V-14-Zylinder-Hubkolbenmotor mit einem Winkel einer Kurbelwellenkröpfungsanordnung jedes Zylinders, der nach Anspruch 1 oder 2 bestimmt wird, **dadurch gekennzeichnet, dass** eine Kurbelwellenkröpfung an einem Vorderende oder einem Hinterende einer Kurbelwelle als Referenzkurbelwellenkröpfung definiert wird, die Winkel der Kurbelwellenkröpfungsanordnung der anderen Kurbelwellenkröpfungen relativ zur Referenzkurbelwellenkröpfung festgelegt werden auf +100,26° $\pm$ 1°, -166,09° $\pm$ 0,5°, -112,16° $\pm$ 0,5°, -72,98° $\pm$ 0,5°, +132,89° $\pm$ 0,5° und +23,96° $\pm$ 0,5° in der Reihenfolge ausgehend von der Referenzkurbelwellenkröpfung, vorausgesetzt, dass die Summe der mit $\pm$ gezeigten Abweichungen relativ zu jedem der Winkel Null sein soll.

4. Viertaktzyklus-Reihen-7-Zylinder oder V-14-Zylinder-Hubkolbenmotor mit einem Winkel einer Kurbelwellenkröpfungsanordnung jedes Zylinders, der nach Anspruch 1 oder 2 bestimmt wird, **dadurch gekennzeichnet, dass** eine Kurbelwellenkröpfung an einem Vorderende oder einem Hinterende einer Kurbelwelle als Referenzkurbelwellenkröpfung definiert wird, die Winkel der Kurbelwellenkröpfungsanordnung der anderen Kurbelwellenkröpfungen relativ zur Referenzkurbelwellenkröpfung festgelegt werden auf +99,52° $\pm$ 0,5°, -154,44° $\pm$ 0,5°, -96,46° $\pm$ 0,5°, -166,30° $\pm$ 0,5°, -44,28° $\pm$ 0,5° und +64,18° $\pm$ 0,5° in der Reihenfolge ausgehend von der Referenzkurbelwellenkröpfung, vorausgesetzt, dass die Summe der mit $\pm$ gezeigten Abweichungen relativ zu jedem der Winkel Null sein soll.

5. Viertaktzyklus-Reihen-7-Zylinder oder V-18-Zylinder-Hubkolbenmotor mit einem Winkel einer Kurbelwellenkröpfungsanordnung jedes Zylinders, der nach Anspruch 1 oder 2 bestimmt wird, **dadurch gekennzeichnet, dass** eine Kurbelwellenkröpfung eines Vorderendes oder eines Hinterendes einer Kurbelwelle als Referenzkurbelwellenkröpfung definiert wird, die Winkel der Kurbelwellenkröpfungsanordnung der anderen Kurbelwellenkröpfungen relativ zur Referenzkurbelwellenkröpfung festgelegt werden auf +119,71° $\pm$ 0,5°, -158,45° $\pm$ 0,5°, -118,35° $\pm$ 0,5°, +83,19° $\pm$ 0,5°, -78,36° $\pm$ 0,5°, -36,42° $\pm$ 0,5°, +42,67° $\pm$ 0,5° und +163,67° $\pm$ 0,5° in der Reihenfolge ausgehend von der Referenzkurbelwellenkröpfung, vorausgesetzt, dass die Summe der mit $\pm$ gezeigten Abweichungen relativ zu jedem der Winkel Null sein soll.

6. Viertaktzyklus-Reihen-7-Zylinder oder V-18-Zylinder-Hubkolbenmotor mit einem Winkel einer Kurbelwellenkröpfungsanordnung jedes Zylinders, der nach Anspruch 1 oder 2 bestimmt wird, **dadurch gekennzeichnet, dass** eine Kurbelwellenkröpfung eines Vorderendes oder eines Hinterendes einer Kurbelwelle als Referenzkurbelwellenkröpfung definiert wird, die Winkel der Kurbelwellenkröpfungsanordnung der anderen Kurbelwellenkröpfungen relativ zur Referenzkurbelwellenkröpfung festgelegt werden auf +80,87° $\pm$ 2°, -80,73° $\pm$ 2°, +154,77° $\pm$ 2°, -155,08° $\pm$ 2°, -123,36° $\pm$ 2°, +121,73° $\pm$ 2°, -39,13° $\pm$ 2° und +37,62° $\pm$ 2° in der Reihenfolge ausgehend von der Referenzkurbelwellenkröpfung, vorausgesetzt, dass die Summe der mit $\pm$ gezeigten Abweichungen relativ zu jedem der Winkel Null sein soll.

7. Viertaktzyklus-Reihen-7-Zylinder oder V-18-Zylinder-Hubkolbenmotor mit einem Winkel einer Kurbelwellenkröpfungsanordnung jedes Zylinders, der nach Anspruch 1 oder 2 bestimmt wird, **dadurch gekennzeichnet, dass** eine Kurbelwellenkröpfung eines Vorderendes oder eines Hinterendes einer Kurbelwelle als Referenzkurbelwellenkröpfung definiert wird, die Winkel der Kurbelwellenkröpfungsanordnung der anderen Kurbelwellenkröpfungen relativ zur Referenzkurbelwellenkröpfung festgelegt werden auf -117,69° $\pm$ 3°, +82,24° $\pm$ 3°, +163,15° $\pm$ 3°, +126,45° $\pm$ 3°, -74,85° $\pm$ 3°, -31,61° $\pm$ 3°, -152,00° $\pm$ 3° und +49,40° $\pm$ 3° in der Reihenfolge ausgehend von der Referenzkurbelwellenkröpfung, vorausgesetzt, dass die Summe der mit $\pm$ gezeigten Abweichungen relativ zu jedem der Winkel Null sein soll.

8. Viertaktzyklus-Reihen-7-Zylinder oder V-18-Zylinder-Hubkolbenmotor mit einem Winkel einer Kurbelwellenkröpfungsanordnung jedes Zylinders, der nach Anspruch 1 oder 2 bestimmt wird, **dadurch gekennzeichnet, dass** eine Kurbelwellenkröpfung eines Vorderendes oder eines Hinterendes einer Kurbelwelle als Referenzkurbelwellenkröpfung definiert wird, die Winkel der Kurbelwellenkröpfungsanordnung der anderen Kurbelwellenkröpfungen relativ zur Referenzkurbelwellenkröpfung festgelegt werden auf -117,16° $\pm$ 0,5°, +83,11° $\pm$ 0,5°, +165,20° $\pm$ 0,5°, +120,44° $\pm$ 0,5°, -77,68° $\pm$ 0,5°, -35,46° $\pm$ 0,5°, -158,64 $\pm$ 0,5° und +44,46° $\pm$ 0,5° in der Reihenfolge ausgehend von der Referenzkurbelwellenkröpfung, vorausgesetzt, dass die Summe der mit $\pm$ gezeigten Abweichungen relativ zu jedem der Winkel Null sein soll.

9. Zweitaktzyklus-Reihen-8-Zylinder-Hubkolbenmotor mit einem Winkel einer Kurbelwellenkröpfungsanordnung jedes Zylinders, der nach Anspruch 1 oder 2 bestimmt wird, **dadurch gekennzeichnet, dass** eine Kurbelwellenkröpfung eines Vorderendes oder eines Hinterendes einer Kurbelwelle als Referenzkurbelwellenkröpfung definiert wird, die Winkel der Kurbelwellenkröpfungsanordnung der anderen Kurbelwellenkröpfungen relativ zur Referenzkurbelwellenkröpfung festgelegt werden auf -144,71° $\pm$ 0,5°, + 92,74° $\pm$ 0,5°, + 129,03° $\pm$ 0,5°, - 84,22° $\pm$ 0,5°, -47,94° $\pm$ 0,5°, - 170,49° $\pm$ 0,5° und + 44,81° $\pm$ 0,5° in der Reihenfolge ausgehend von der Referenzkurbelwellenkröpfung, vorausgesetzt, dass die Summe der mit ± gezeigten Abweichungen relativ zu jedem der Winkel Null sein soll.

**10.** Zweitaktzyklus-Reihen-8-Zylinder-Hubkolbenmotor mit einem Winkel einer Kurbelwellenkröpfungsanordnung jedes Zylinders, der nach Anspruch 1 oder 2 bestimmt wird, **dadurch gekennzeichnet, dass** eine Kurbelwellenkröpfung eines Vorderendes oder eines Hinterendes einer Kurbelwelle als Referenzkurbelwellenkröpfung definiert wird, die Winkel der Kurbelwellenkröpfungsanordnung der anderen Kurbelwellenkröpfungen relativ zur Referenzkurbelwellenkröpfung festgelegt werden auf +87,67° ± 0,5°, -95,70° ± 0,5°, +172, 35° ± 0,5°, -132,50° ± 0,5°, +135,55° ± 0,5°, -47,82° ± 0,5° und +39,85° ± 0,5° in der Reihenfolge ausgehend von der Referenzkurbelwellenkröpfung, vorausgesetzt, dass die Summe der mit ± gezeigten Abweichungen relativ zu jedem der Winkel Null sein soll.

**11.** Zweitaktzyklus-Reihen-8-Zylinder-Hubkolbenmotor mit einem Winkel einer Kurbelwellenkröpfungsanordnung jedes Zylinders, der nach Anspruch 1 oder 2 bestimmt wird, **dadurch gekennzeichnet, dass** eine Kurbelwellenkröpfung eines Vorderendes oder eines Hinterendes einer Kurbelwelle als Referenzkurbelwellenkröpfung definiert wird, die Winkel der Kurbelwellenkröpfungsanordnung der anderen Kurbelwellenkröpfungen relativ zur Referenzkurbelwellenkröpfung festgelegt werden auf +92,80° ± 0,5°, - 140,66° ± 0,5°, - 83,55° ± 0,5°, +133,09° ± 0,5°, - 169,79° ± 0,5°, - 43,25° ± 0,5° und +49,54° ± 0,5° in der Reihenfolge ausgehend von der Referenzkurbelwellenkröpfung, vorausgesetzt, dass die Summe der mit ± gezeigten Abweichungen relativ zu jedem der Winkel Null sein soll.

**12.** Anordnung eines Viertaktzyklus-Reihen-7-Zylinder oder V-14-Zylinder Hubkolbenmotors nach Anspruch 3 oder 4, **dadurch gekennzeichnet, dass** der Motor relativ zu einer tragenden Struktur des Motors elastisch gelagert ist.

**13.** Anordnung eines Viertaktzyklus-Reihen-9-Zylinder oder V-18-Zylinder-Hubkolbenmotors nach einem der Ansprüche 5 bis 8, **dadurch gekennzeichnet, dass** der Motor von einer tragenden Struktur des Motors elastisch gelagert ist.

**14.** Anordnung eines Zweitaktzyklus-Reihen-8-Zylinder-Hubkolbenmotors nach einem der Ansprüche 9 bis 11, **dadurch gekennzeichnet, dass** der Motor von einer tragenden Struktur des Motors elastisch gelagert ist.

**Revendications**

**1.** Procédé pour réaliser un agencement de bras de manivelle de chaque cylindre dans un moteur à combustion interne alternatif multicylindre, ledit procédé comprenant un procédé pour déterminer au moins un des angles de l'agencement relatif entre chaque cylindre, c'est-à-dire au moins un des angles dudit agencement de bras de manivelle, de manière à ce qu'un couple non équilibré agissant comme force vibratoire soit minimisé, ledit procédé de détermination dudit angle comprenant les étapes consistant à :

fixer une condition restrictive dans laquelle |$g_m$| est mis à zéro ou est approché à l'infini de zéro ou est mis à une valeur finie qui est permise par l'environnement où le moteur est installé ou en deçà de celle-ci,

où
$F_j$ est une force non équilibrée d'ordre m de chaque cylindre dans le moteur à combustion interne alternatif multicylindre ayant le nombre de bras de manivelle égal à n, et est représenté par :

$$F_j = F_m \cdot \exp(i_m \alpha_j),$$

$F_m$ étant une grandeur de la force non équilibrée d'ordre m,
i = (- 1)$^{1/2}$ et $\alpha_j$ étant un angle du bras de manivelle de rang j, j étant égal à 1, 2, ⋯, n,
$F_{(m)}$ est la somme de la force non équilibrée d'ordre m qui agit comme force vibratoire du moteur entier et est représenté par :

$$F_{(m)} = F_m [1\ 1\ \cdots\ 1] [\exp(im \cdot \alpha_1)\ \exp(im \cdot \alpha_2)$$
$$\cdots\ \exp(im \cdot \alpha_n)]^t = F_m \cdot g_m,$$

m étant le nombre ou les nombres d'ordre ou d'ordres de la force non équilibrée dont on souhaite qu'elle tombe dans une plage admissible, par exemple 1 et 2, et t étant une désignation d'une matrice tournée, et
$|g_m|$ est une valeur absolue d'un coefficient sans dimension de la force non équilibrée, qui est obtenu en divisant $F_{(m)}$ par $F_m$, et est représenté par :

$$|g_m| = abs\ \{[1\ 1\ \cdots\ 1]\ [exp\ (im\ \cdot\ \alpha_1)\ exp\ (im\ \cdot\ \alpha_2)\ \cdots\ exp\ (im\ \cdot\ \alpha_n)]^t\}\ ;$$

obtenir ledit angle dudit agencement de bras de manivelle $\alpha_j$ par une expression dans un système de coordonnées orthogonal, ledit angle d'agencement de bras de manivelle $\alpha_j$ minimisant, sous ladite condition restrictive, la nième puissance de $|f_k|$, n étant un nombre pair ;
où
$M_{(k)}$ est un couple non équilibré qui est exprimé par la force non équilibrée d'ordre k de chaque bras de manivelle, pondérée par la distance L entre chaque cylindre, et est représenté par :

$$M_{(k)} = F_k L\ [s_1\ s_2\ \cdots\ s_n]\ [exp\ (ik\ \cdot\ \alpha_1)\ exp\ (ik\ \cdot\ \alpha_2)\ \cdots\ exp\ (ik\ \cdot\ \alpha_n)]^t = F_k L\ \cdot\ f_k$$

avec $s_j$ étant une coordonnée sans dimension, dans la direction du vilebrequin du bras de manivelle de rang j, et $|f_k|$ est une valeur absolue d'un coefficient sans dimension du couple non équilibré, qui est obtenu en divisant $M_{(k)}$ par $F_k L$, et est représenté par :

$$|f_k| = abs\ \{[s1\ s2\ \cdots\ sn]\ [exp\ (ik\ \cdot\ \alpha_1)\ exp\ (ik\ \cdot\ \alpha_2)\ \cdots\ exp\ (ik\ \cdot\ \alpha_n)]^t\}.$$

2. Procédé pour réaliser un agencement de bras de manivelle de chaque cylindre dans un moteur à combustion interne alternatif multicylindre, ledit procédé comprenant un procédé pour déterminer au moins un des angles d'agencement relatif entre chaque cylindre, c'est-à-dire au moins un des angles dudit agencement de bras de manivelle, de manière à ce qu'un couple non équilibré agissant comme force vibratoire soit minimisé, ledit procédé de détermination dudit angle comprenant les étapes consistant à :

fixer une condition restrictive dans laquelle $|g_m|$ est mis à zéro ou est approché à l'infini de zéro ou est mis à une valeur finie qui est permise par l'environnement où le moteur est installé ou en deçà de celle-ci,

où
$F_j$ est une force non équilibrée d'ordre m de chaque cylindre situé dans le moteur à combustion interne alternatif multicylindre ayant le nombre de bras de manivelle égal à n, et est représenté par :

$$F_j = F_m\ \cdot\ exp\ (im\alpha_j)$$

$F_m$ étant une grandeur de la force non équilibrée d'ordre m,
$i = (-1)^{1/2}$ et $\alpha_j$ étant un angle du bras de manivelle de rang j, j étant égal à 1, 2, $\cdots$, n,
$F_{(m)}$ est la somme de la force non équilibrée d'ordre m qui agit comme force vibratoire du moteur entier et est représenté par :

$$F_{(m)} = F_m\ [1\ 1\ \cdots\ 1]\ [exp\ (im\ \cdot\ \alpha_1)\ exp\ (im\ \cdot\ \alpha_2)\ \cdots\ exp\ (im\ \cdot\ \alpha_n)]^t = F_m\ \cdot\ g_m$$

m étant le nombre ou les nombres d'ordre ou d'ordres de la force non équilibrée dont on veut qu'elle tombe dans une plage admissible, par exemple 1 et 2, et t étant une désignation d'une matrice tournée, et
$|g_m|$ est une valeur absolue d'un coefficient sans dimension de la force non équilibrée, qui est obtenu en divisant $F_{(m)}$ par $F_m$, et est représenté par :

$$|g_m| = \text{abs} \{[1\ 1\ \cdots\ 1]\ [\exp\ (im \cdot \alpha_1)\ \exp\ (im \cdot \alpha_2)\ \cdots\ \exp\ (im \cdot \alpha_n)]^t\}\ ;$$

obtenir ledit angle dudit agencement de bras de manivelle $\alpha_j$ par une expression dans un système de coordonnées orthogonal, ledit angle d'agencement de bras de manivelle $\alpha_j$ minimisant, sous ladite condition restrictive, ladite

somme $\sum\limits_{k} \beta_k\ |f_k| \wedge (2p_k)\ ;$

où
$M_{(k)}$ est un couple non équilibré qui est exprimé par la force non équilibrée d'ordre k de chaque bras de manivelle, pondérée par la distance L entre chaque cylindre, et est représenté par :

$$M_{(k)} = F_k L\ [s_1\ s_2\ \cdots\ s_n]\ [\exp\ (ik \cdot \alpha_1)\ \exp\ (ik \cdot \alpha_2)\ \cdots\ \exp\ (ik \cdot \alpha_n)]^t = F_k L \cdot f_k$$

$s_j$ étant une coordonnée sans dimension, dans la direction du vilebrequin, du bras de manivelle de rang j,
$|f_k|$ est la valeur absolue d'un coefficient sans dimension du couple non équilibré, qui est obtenu en divisant $M_{(k)}$ par $F_k L$, et est représenté par :

$$|f_k| = \text{abs} \{[s_1\ s_2\ \cdots\ s_n]\ [\exp\ (ik \cdot \alpha_1)\ \exp\ (ik \cdot \alpha_2)\ \cdots\ \exp\ (ik \cdot \alpha_n)]^t\}$$

et la somme de la nième puissance de $|f_k|$, n étant un nombre pair, ladite nième puissance de $|f_k|$ étant pondérée, est représentée par :

$$\sum\limits_{k} \beta_k\ |f_k| \wedge (2p_k)$$

"$\wedge$" étant une désignation de puissance ; $\beta$ étant un coefficient de pondération d'ordre k ; $p_k$, qui est un entier, étant une puissance d'ordre k.

3. Moteur à combustion interne à sept cylindres de type en ligne ou à quatorze cylindres de type V à quatre temps ayant un angle d'un agencement de bras de manivelle de chaque cylindre étant déterminé selon la revendication 1 ou 2, **caractérisé en ce qu'**un bras de manivelle d'une extrémité avant ou d'une extrémité arrière d'un vilebrequin est défini en tant que bras de manivelle de référence, des angles de l'agencement de bras de manivelle d'autres bras de manivelle sont fixés, par rapport au bras de manivelle de référence, à : + 100,26° ± 1° , - 166,09° ± 0,5° , - 112,16° ± 0,5° , - 72,98° ± 0,5° , + 132,89° ± 0,5° et + 23,96° ± 0,5° dans l'ordre compté à partir du bras de manivelle de référence, à condition que le total des écarts, indiqués par ±, par rapport à chacun desdits angles soit égal à zéro.

4. Moteur à combustion interne à sept cylindres de type en ligne ou à quatorze cylindres de type V à quatre temps ayant un angle d'un agencement de bras de manivelle de chaque cylindre étant déterminé selon la revendication 1 ou 2, **caractérisé en ce qu'**un bras de manivelle d'une extrémité avant ou d'une extrémité arrière d'un vilebrequin est défini en tant que bras de manivelle de référence, des angles de l'agencement de bras de manivelle d'autres bras de manivelle sont fixés, par rapport au bras de manivelle de référence, à : + 99,52° ± 0,5° , - 154,44° ± 0,5° ,

- 96,46° ± 0,5° , + 166,30° ± 0,5° , - 44,28° ± 0,5° et + 64,18° ± 0,5° dans l'ordre compté à partir du bras de manivelle de référence, à condition que le total des écarts, indiqués par ±, par rapport à chacun desdits angles soit égal à zéro.

**5.** Moteur à combustion interne à neuf cylindres de type en ligne ou à dix-huit cylindres de type V à quatre temps ayant un angle d'un agencement de bras de manivelle de chaque cylindre étant déterminé selon la revendication 1 ou 2, **caractérisé en ce qu'**un bras de manivelle d'une extrémité avant ou d'une extrémité arrière d'un vilebrequin est défini en tant que bras de manivelle de référence, des angles de l'agencement de bras de manivelle d'autres bras de manivelle sont fixés, par rapport au bras de manivelle de référence, à : + 119,71° ± 0,5° , - 158,45° ± 0,5° , - 118,35° ± 0,5° , + 83,19° ± 0,5° , - 78,36° ± 0,5° , - 36,42° ± 0,5° , + 42,67° ± 0,5° et + 163,67° ± 0,5° dans l'ordre compté à partir du bras de manivelle de référence, à condition que le total des écarts, indiqués par ±, par rapport à chacun desdits angles soit égal à zéro.

**6.** Moteur à combustion interne à neuf cylindres de type en ligne ou à dix-huit cylindres de type V à quatre temps ayant un angle d'un agencement de bras de manivelle de chaque cylindre étant déterminé selon la revendication 1 ou 2, **caractérisé en ce qu'**un bras de manivelle d'une extrémité avant ou d'une extrémité arrière d'un vilebrequin est défini en tant que bras de manivelle de référence, des angles de l'agencement de bras de manivelle d'autres bras de manivelle sont fixés, par rapport au bras de manivelle de référence, à : + 80,87° ± 2°, - 80,73° ± 2°, + 154,77° ± 2°, - 155,08° ± 2°, 123,36° ± 2°, + 121,73° ± 2°, - 39,13° ± 2° et + 37,62° ± 2° dans l'ordre compté à partir du bras de manivelle de référence, à condition que le total des écarts, indiqués par ±, par rapport à chacun desdits angles soit égal à zéro.

**7.** Moteur à combustion interne à neuf cylindres de type en ligne ou à dix-huit cylindres de type V à quatre temps ayant un angle d'un agencement de bras de manivelle de chaque cylindre étant déterminé selon la revendication 1 ou 2, **caractérisé en ce qu'**un bras de manivelle d'une extrémité avant ou d'une extrémité arrière d'un vilebrequin est défini en tant que bras de manivelle de référence, des angles de l'agencement de bras de manivelle d'autres bras de manivelle sont fixés, par rapport au bras de manivelle de référence, à : - 117,69° ± 3° , + 82,24° ± 3° , + 163,15° ± 3° , + 126,45° ± 3° , - 74,85° ± 3 , - 31,61° ± 3° , - 152,00° ± 3° et + 49,40° ± 3° dans l'ordre compté à partir du bras de manivelle de référence, à condition que le total des écarts, indiqués par ±, par rapport à chacun desdits angles soit égal à zéro.

**8.** Moteur à combustion interne à neuf cylindres de type en ligne ou à dix-huit cylindres de type V à quatre temps ayant un angle d'un agencement de bras de manivelle de chaque cylindre étant déterminé selon la revendication 1 ou 2, **caractérisé en ce qu'**un bras de manivelle d'une extrémité avant ou d'une extrémité arrière d'un vilebrequin est défini en tant que bras de manivelle de référence, des angles de l'agencement de bras de manivelle d'autres bras de manivelle sont fixés, par rapport au bras de manivelle de référence, à : - 117,16° ± 0,5°, + 83,11° ± 0,5° , + 165,20° ± 0,5°, + 120,44° ± 0,5°, - 77,68° ± 0,5°, - 35,46° ± 0,5°, - 158,64° ± 0,5° et + 44,46° ± 0,5° dans l'ordre compté à partir du bras de manivelle de référence, à condition que le total des écarts, indiqués par ±, par rapport à chacun desdits angles soit égal à zéro.

**9.** Moteur à combustion interne à huit cylindres de type en ligne à deux temps ayant un angle d'un agencement de bras de manivelle de chaque cylindre étant déterminé selon la revendication 1 ou 2, **caractérisé en ce qu'**un bras de manivelle d'une extrémité avant ou d'une extrémité arrière d'un vilebrequin est défini en tant que bras de manivelle de référence, les angles de l'agencement de bras de manivelle d'autres bras de manivelle sont fixés, par rapport au bras de manivelle de référence, à : - 144,71° ± 0,5°, + 92,74° ± 0,5°, + 129,03° ± 0,5°, - 84,22° ± 0,5°, - 47,94° ± 0,5°, - 170,49° ± 0,5° et + 44,81° ± 0,5° dans l'ordre compté à partir du bras de manivelle de référence, à condition que le total des écarts, indiqués par ±, par rapport à chacun desdits angles soit égal à zéro.

**10.** Moteur à combustion interne à huit cylindres de type en ligne à deux temps ayant un angle d'un agencement de bras de manivelle de chaque cylindre étant déterminé selon la revendication 1 ou 2, **caractérisé en ce qu'**un bras de manivelle d'une extrémité avant ou d'une extrémité arrière d'un vilebrequin est défini en tant que bras de manivelle de référence, les angles de l'agencement de bras de manivelle d'autres bras de manivelle sont fixés, par rapport au bras de manivelle de référence, à : + 87,67° ± 0,5° , - 95,70° ± 0,5° , + 172,35° ± 0,5° , - 132,50° ± 0,5° , + 135,55° ± 0,5° , - 47,82° ± 0,5° et + 39,85° ± 0,5° dans l'ordre compté à partir du bras de manivelle de référence, à condition que le total des écarts, indiqués par ±, par rapport à chacun desdits angles soit égal à zéro.

**11.** Moteur à combustion interne à huit cylindres de type en ligne à deux temps ayant un angle d'un agencement de bras de manivelle de chaque cylindre étant déterminé selon la revendication 1 ou 2, **caractérisé en ce qu'**un bras de manivelle d'une extrémité avant ou d'une extrémité arrière d'un vilebrequin est défini en tant que bras de manivelle de référence, les angles de l'agencement de bras de manivelle d'autres bras de manivelle sont fixés, par rapport au bras de manivelle de référence, à : + 92,80° $\pm$ 0,5°, - 140,66° $\pm$ 0,5°, - 83,55° $\pm$ 0,5°, + 133,09° $\pm$ 0,5°, - 169,79° $\pm$ 0,5°, - 43,25° $\pm$ 0,5° et + 49,54° $\pm$ 0,5° dans l'ordre compté à partir du bras de manivelle de référence, à condition que le total des écarts, indiqués par $\pm$, par rapport à chacun desdits angles soit égal à zéro.

12. Agencement d'un moteur à combustion interne à sept cylindres de type en ligne ou à quatorze cylindres de type V à quatre temps selon la revendication 3 ou 4, **caractérisé en ce que** ledit moteur est soutenu de façon élastique par rapport à une structure de soutien dudit moteur.

13. Agencement d'un moteur à combustion interne à neuf cylindres de type en ligne ou à dix-huit cylindres de type V à quatre temps selon l'une quelconque des revendications 5 à 8, **caractérisé en ce que** ledit moteur est soutenu de façon élastique par rapport à une structure de soutien dudit moteur.

14. Agencement d'un moteur à combustion interne à huit cylindres de type en ligne à deux temps selon l'une quelconque des revendications 9 à 11, **caractérisé en ce que** ledit moteur est soutenu de façon élastique par rapport à une structure de soutien dudit moteur.